Europäisches Patentamt

European Patent Office

Office européen des brevets

(19)

(11) **EP 1 108 970 A1**

(12) # DEMANDE DE BREVET EUROPEEN

| | |
|---|---|
| (43) Date de publication:<br>**20.06.2001 Bulletin 2001/25** | (51) Int Cl.⁷: $F41G\ 7/30$ |

(21) Numéro de dépôt: **00403378.3**

(22) Date de dépôt: **01.12.2000**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **15.12.1999 FR 9915839**

(71) Demandeur: **THOMSON-CSF**
**75008 Paris (FR)**

(72) Inventeurs:
• **Fleury, Sylvie**
 **94117 Arcueil Cedex (FR)**
• **Beaulieu, Louis**
 **94117 Arcueil Cedex (FR)**

(74) Mandataire: **Lucas, Laurent Jacques**
**Thomson-CSF**
**Propriété Intellectuelle**
**13, avenue du Président S. Allende**
**94117 Arcueil Cedex (FR)**

(54) **Dispositif de mesure non ambigue du roulis d'un projectile, et application à la correction de trajectoire d'un projectile.**

(57) La présente invention concerne un dispositif de mesure non ambiguë du roulis d'un projectile. Le dispositif comporte au moins :

- un radar (41) équipé de ses moyens de traitement et émettant un signal vers le culot (22) du projectile (1) selon au moins une direction de polarisation ;
- un ensemble de rainures parallèles (21) réalisées sur le culot dont la profondeur est modulée de façon dissymétrique par rapport à l'axe de symétrie (44) du projectile ;

l'axe de symétrie (44) du projectile ne passant pas par le point (A) de l'antenne (41) du radar où est généré le faisceau d'antenne (42), les moyens de traitement analysant en réception un signal rétrodiffusé par le culot (22) du projectile, ce signal étant modulé en fonction de l'angle de roulis ($\Phi_i$) du projectile, la modulation présentant deux maxima locaux correspondant à des positions angulaires de roulis du projectile telles que la polarisation $\vec{E}$ est parallèle aux rainures, les moyens de traitement levant l'ambiguïté de 180° en comparant les niveaux des maxima locaux.

L'invention s'applique notamment pour la correction de trajectoires de projectiles tirés par un canon, et où la correction nécessite de connaître la position en roulis des projectiles.

FIG.4a

EP 1 108 970 A1

**Description**

La présente invention concerne un dispositif de mesure non ambiguë du roulis d'un projectile et son application à la correction de la trajectoire du projectile. Elle s'applique notamment pour la correction de trajectoires de projectiles tirés par un canon, et où la correction nécessite de connaître la position en roulis des projectiles.

Pour guider un projectile ou un missile en vol, il faut pouvoir agir à bon escient sur ses dispositifs de pilotages tels que par exemple les gouvernes, les impulseurs ou les jets de gaz. Si l'on considère par exemple l'action d'un impulseur latéral embarqué sur le projectile et destiné à corriger la trajectoire de ce dernier, il faut pouvoir commander l'impulseur au bon moment, c'est-à-dire lorsque la situation de l'impulseur est telle que son action orientera le projectile dans la bonne direction. La position de l'impulseur étant parfaitement définie par rapport au projectile, il suffit donc de connaître la position en roulis de ce dernier. En d'autres termes, il suffit de connaître l'orientation du projectile par rapport à un plan passant par un axe horizontal ou vertical et l'axe longitudinal du projectile, c'est-à-dire l'angle de roulis de ce dernier.

Des solutions sont connues pour connaître le roulis d'un projectile, soit au moment de la mise à feu, soit au cours de la phase de vol. Une première solution pour mesurer le roulis d'un projectile consiste notamment à acquérir cette information lorsque le projectile quitte la bouche du canon. Le projectile contient un composant magnétique dont le vecteur champ magnétique est connu. En sortie du canon deux bobinages sont disposés de telle sorte qu'une tension est induite quand le projectile quitte le canon. Une unité de calcul utilise cette tension induite pour connaître le roulis au point de départ de la phase de vol. Cette solution est notamment décrite dans la demande de brevet EP 0451122. L'utilisation d'un tel dispositif suppose néanmoins de connaître avec précision la loi de variation de la vitesse de rotation en roulis au cours de la phase de vol, ce qui n'est généralement pas possible.

Une autre solution, notamment décrite par le brevet US 5 039 029, consiste à observer les caractéristiques d'un ou de plusieurs signaux émis par le projectile. En transmettant au sol un signal polarisé linéairement, le plan d'émission relativement à la géométrie du missile peut être identifié. Ceci est possible au sol en comparant les niveaux reçus selon deux polarisations orthogonales. Il reste néanmoins une ambiguïté de 180°. Pour résoudre cette ambiguïté, le projectile comporte un réseau d'antennes pouvant être pilotées en phase de manière à générer une modulation en roulis. On obtient des signaux de niveaux différents pour deux directions espacées de 180° dans le plan précédemment identifié. Cette solution a cependant pour inconvénient qu'elle nécessite des composants actifs à bord du projectile. Il en résulte un problème de coût, mais aussi un problème de fiabilité car ces composants ne sont généralement pas en mesure de supporter les accélérations imposées au projectile sans dommages.

Les solutions précédentes soit ne mesurent pas le roulis au cours de la phase de vol, soit nécessitent d'embarquer à bord du projectile des composants électroniques. Pour des raisons de fiabilité et de coût notamment, il est préférable de mettre en oeuvre une solution ne faisant pas intervenir d'éléments actifs dans le projectile, tout en permettant la mesure du roulis du projectile. Une telle solution passive pourrait être élaborée à partir d'une simple observation radar.

Classiquement, un radar illumine le projectile selon une polarisation donnée, le signal rétrodiffusé par le projectile étant analysé selon la même polarisation que celle utilisée à l'émission. Ainsi utilisé, le radar fournit uniquement la position du projectile. Le projectile étant en rotation, aucune indication concernant sa position en roulis n'est accessible puisqu'il est sensiblement à symétrie de révolution. Par ailleurs, cette géométrie de révolution ne génère aucune dépolarisation que l'on pourrait chercher à exploiter pour acquérir une information concernant par exemple la ligne de visée relativement à l'axe du projectile. Pour que le projectile ait une signature dépendant de son roulis, il est nécessaire d'en modifier la géométrie de telle sorte qu'illuminé par une onde radar, l'amplitude du champ rétrodiffusé dépende de son roulis. Une solution de géométrie peut consister à intégrer des rainures judicieusement dimensionnées et encastrées dans le culot arrière du projectile. Ces rainures constituent des éléments pour lesquels le champ rétrodiffusé dépend fortement de la polarisation incidente, la polarisation du radar étant fixe. La dépendance relativement à la polarisation incidente résulte de l'orientation des rainures, elles-mêmes en rotation de par leur appartenance au projectile. Cette solution a l'avantage de ne pas nécessiter de composants actifs à bord du projectile. Cependant elle présente l'inconvénient de ne donner qu'une mesure de l'angle de roulis qu'à π près. Il y a donc une ambiguïté de mesure de 180°. En effet, une rainure est parallèle à la direction de polarisation du champ électromagnétique émis par le radar pour un angle de roulis du projectile à π près.

Un but de l'invention est notamment de pallier cet inconvénient et donc d'obtenir une mesure de l'angle de roulis d'un projectile sans ambiguïté et sans composants actifs à bord de ce dernier.

A cet effet, l'invention a pour objet un dispositif de mesure de l'angle de roulis d'un projectile, caractérisé en ce qu'il comporte au moins :

- un radar équipé de ses moyens de traitement et émettant un signal vers le culot du projectile selon au moins une direction de polarisation incidente $\vec{E}$ ;
- un ensemble de rainures parallèles réalisées sur le culot dont la profondeur est modulée de façon dissymétrique par rapport à l'axe de symétrie du projectile ;

l'axe de symétrie du projectile ne passant pas par le point de l'antenne du radar où est généré le faisceau d'antenne, les moyens de traitement analysant en réception un signal rétrodiffusé par le culot du projectile, ce signal étant modulé en fonction de l'angle de roulis du projectile, la modulation présentant deux maxima locaux correspondant à des positions angulaires de roulis du projectile telles que la polarisation $\vec{E}$ est parallèle aux rainures, les moyens de traitement levant l'ambiguïté de 180° en comparant les niveaux des maxima locaux.

Dans un mode particulier de réalisation, la profondeur des rainures est croissante.

L'invention a pour principaux avantages qu'elle augmente la fiabilité de mesure du roulis, qu'elle est simple à mettre en oeuvre et qu'elle est économique.

D'autres caractéristiques et avantages de l'invention apparaîtront à l'aide de la description qui suit faite en regard de dessins annexés qui représentent :

- la figure 1, un projectile guidé avec son moyen de changement de trajectoire ;
- la figure 2, un exemple de réalisation de rainures sur le culot d'un projectile ;
- la figure 3, une courbe de modulation de l'amplitude d'un signal radar rétrodiffusé par un culot rainuré en fonction du roulis ;
- les figures 4a et 4b, un exemple de réalisation d'un dispositif selon l'invention pour des mesures de roulis d'un projectile, les angles de roulis étant décalés de 180° ;
- la figure 5, une illustration du fonctionnement d'un dispositif selon l'invention pour lever l'ambiguïté de mesure;
- la figure 6, une courbe de modulation de l'amplitude du signal rétrodiffusé en fonction du roulis, permettant de lever l'ambiguïté par comparaison de maxima locaux.

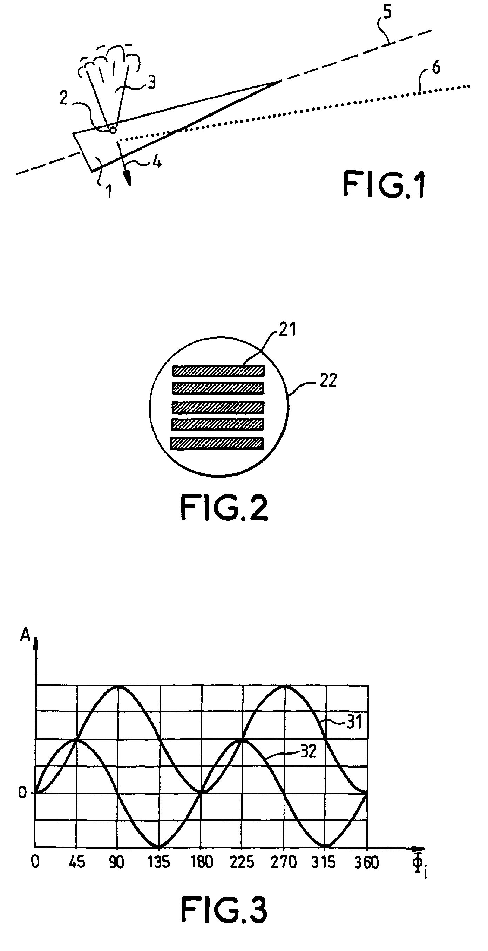

La figure 1 présente, de manière schématique, un projectile 1 guidé avec son moyen 2 de changement de trajectoire. Le projectile 1 est éjecté d'un canon avec un mouvement de rotation de roulis. Le moyen 2 de changement de trajectoire est par exemple un impulseur latéral constitué d'un orifice latéral d'éjection de gaz 3. L'impulseur peut être couplé à un générateur de gaz embarqué à bord du projectile par l'intermédiaire d'une vanne ouverte par impulsions sous contrôle d'un dispositif de pilotage répondant aux ordres transmis par exemple par des impulsions radar ou laser. Sur commande, la vanne laisse échapper, pendant un temps très bref, une bouffée de gaz de propulsion par l'orifice latéral d'éjection. Cela déplace latéralement le projectile 1 qui est dévié dans la direction 4 où a lieu la poussée de la bouffée de gaz et quitte son ancienne trajectoire 5 pour en adopter une nouvelle 6. Bien évidemment, pour pouvoir utiliser le ou les impulseurs latéraux à bon escient, il est nécessaire de connaître à tout instant l'angle de roulis du projectile 1.

Comme il a été indiqué précédemment, une solution pour éviter d'embarquer des composants actifs à bord du projectile 1, en vue de connaître son roulis, consiste à utiliser les techniques radar. Le radar illumine le projectile 1 selon une polarisation donnée et le signal rétrodiffusé par le projectile est analysé selon la même polarisation que celle à l'émission. Puisque le projectile est sensiblement à symétrie de révolution, aucune indication concernant son roulis n'est accessible sans modification spécifique de sa géométrie.

La figure 2 présente une modification de la géométrie d'un projectile donnant à ce dernier une signature dépendant de son roulis, de telle sorte qu'illuminé par une onde radar, l'amplitude du champ rétrodiffusé dépend de son roulis. A cet effet, des rainures 21 parallèles sont réalisées sur le culot arrière 22 du projectile. Ces rainures constituent des éléments pour lesquels le champ rétrodiffusé dépend fortement de la polarisation incidente. La polarisation du radar étant fixe, la dépendance relativement à la polarisation incidente résulte de l'orientation des rainures qui sont elles-mêmes en rotation à cause de leur appartenance au projectile. Plus précisément, des rainures orientées perpendiculairement à la polarisation incidente affectent peu la signature $\sigma_x$ du culot arrière pour une observation selon la même polarisation. Ceci n'est plus le cas pour une polarisation parallèle aux rainures 21. Dans ce cas, une onde guidée est générée à l'intérieur de ces rainures puis retournée déphasée relativement à la contribution de la partie non rainurée du culot. La combinaison de ces deux contributions, celle des rainures et celle de partie non rainurée, provoque une modulation du signal global rétrodiffusé par le culot du projectile.

Un modèle mathématique simple représente les modulations observées pour les deux signaux. On désigne par $C_i$ le signal rétrodiffusé parallèlement à la polarisation incidente reçu par le radar, et par $X_i$ le signal en polarisation croisée, c'est-à-dire perpendiculaire à la polarisation incidente, pour un angle de roulis $\Phi_i$. L'angle de roulis égal à 0° correspond par exemple à une polarisation perpendiculaire aux rainures. Les signaux $C_i$ et $X_i$ en fonction de l'angle de roulis $\Phi_i$ sont donnés par les relations suivantes :

$$C_i = A \left[ 1 - (\cos(\Phi_i))^2 \right] \qquad (1)$$

$$X_i = B \sin(\Phi_i)\cos(\Phi_i) \qquad (2)$$

Où A et B sont des constantes arbitraires.

Si la géométrie des rainures est judicieusement choisie, alors la signature des rainures en polarisation perpendiculaire est voisine de celle du reste du culot.

La figure 3 illustre l'allure des signaux $C_i$ et $X_i$ respectivement par une première courbe 31 et une deuxième courbe 32 dans un système d'axes, où l'axe des abscisses représente les valeurs de l'angle de roulis $\Phi_i$ entre 0° et 360° et l'axe des ordonnées représente les amplitudes des deux signaux. L'allure de ces derniers en fonction de l'angle de roulis montre la modulation évoquée précédemment. En ce qui concerne par exemple le signal $C_i$ parallèle à la polarisation incidente, la courbe 31 montre qu'il est minimum lorsque les rainures sont perpendiculaires à la polarisation incidente, correspondant à un angle de roulis $\Phi_i$ pris égal à 0°, et qu'il est maximum lorsque les rainures sont parallèles à la polarisation incidente, correspondant à un angle de roulis égal à 90°. En négligeant le temps de propagation des signaux radar par rapport à la vitesse de rotation du projectile, la courbe 31 montre donc que l'on peut définir l'angle de roulis $\Phi_i$ par rapport à la direction de la polarisation incidente. Cependant le résultat obtenu est malheureusement entaché d'une ambiguïté. La mesure du roulis ainsi obtenue l'est à 180° près. Les minima de la courbe de modulation 31 sont en effet espacés de 180°. Cette ambiguïté de $\pi$ se déduit par ailleurs de la relation (1) qui est fonction du cosinus carré, $(\cos(\Phi_i))^2$, de l'angle de roulis $\Phi_i$. $\Phi_i$ et $\Phi_i+\pi$ donnent en effet le même signal $C_i$.

L'invention a notamment pour objet de déterminer de manière non ambiguë le roulis du projectile. Selon l'invention, pour lever l'ambiguïté, l'observation du culot du projectile par le radar est réalisée de telle façon que l'axe de symétrie du projectile ne rencontre pas l'axe du faisceau d'antenne du radar, et le culot comporte des rainures, la profondeur des rainures étant modulée.

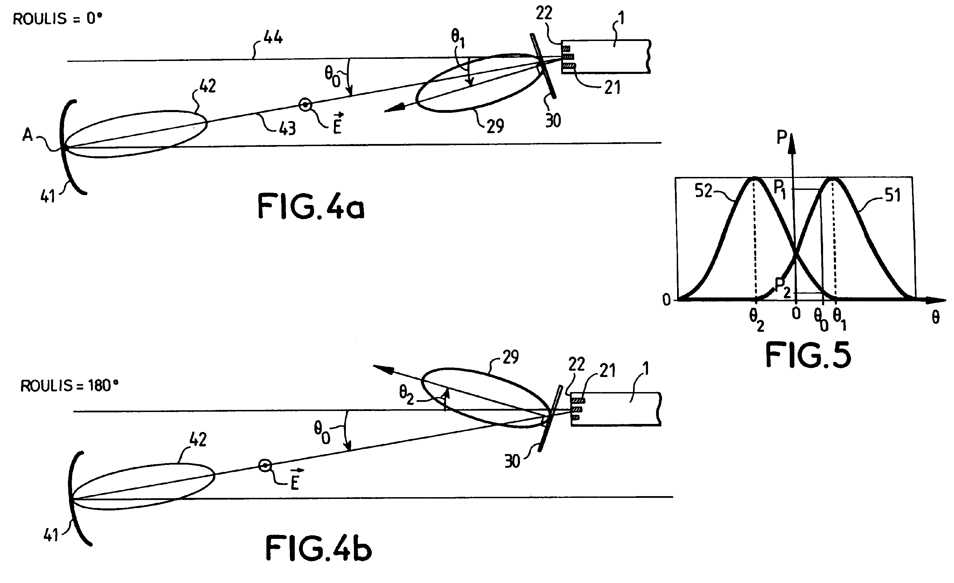

Les figures 4a et 4b illustrent donc un mode de réalisation possible d'un dispositif selon l'invention et son application pour deux mesures d'angles de roulis d'un projectile 1 espacés de 180°. Le culot du projectile est équipé de rainures parallèles 21. Un radar, représenté par son antenne 41, illumine le culot 22 du projectile 1. Selon l'invention, l'axe de symétrie 44 du projectile ne passe pas par la position radar, c'est-à-dire par le point A de l'antenne où est généré le faisceau 42 d'antenne. L'axe de symétrie 44 du projectile fait donc un angle $\theta_0$ avec l'axe 43 du faisceau. Par ailleurs, la profondeur des rainures 21 du culot est modulée de façon dissymétrique par rapport à l'axe 44 du projectile. Ainsi, la profondeur des rainures croît par exemple d'une rainure périphérique à l'autre. De préférence, ces dernières croissent linéairement.

La phase du signal de l'onde réfléchie à l'intérieur d'une rainure 21 dépend de la longueur électrique de cette dernière et donc de sa profondeur. Les signaux sortant de chacune des rainures ont donc une même amplitude mais des phases différentes. Dans le mode de réalisation illustré par les figures 4a et 4b, la phase varie linéairement. La sommation des contributions de chacune des rainures génère une réponse 29 dont le maximum est décalé d'un angle $\theta_1$, $\theta_2$ par rapport à l'axe de symétrie 44 du projectile, normal au culot, et ceci dans le plan contenant l'axe de symétrie 44 du projectile et la direction perpendiculaire aux rainures 21. Ce dernier plan est le plan des figures 4a et 4b. Dans l'exemple de réalisation illustré par ces figures, le plan de phase 30 de l'onde rétrodiffusé est parallèle à la droite passant par les fonds des rainures, c'est-à-dire la droite représentative de la modulation de ces dernières.

En se référant à la figure 4a, on voit que la normale au plan de phase 30 fait un angle $\theta_1$ avec l'axe de symétrie 44 du projectile. A titre d'exemple, cette figure correspond à un angle de roulis $\Phi_i$ pris égal à 0°, pour une polarisation incidente $\vec{E}$ parallèle aux rainures. La figure 4b, représente le projectile dans une position de roulis décalée de 180°. La polarisation incidente $\vec{E}$ est toujours parallèle aux rainures, mais dans ce cas, la normale au plan de phase 30 fait un angle $\theta_2$ avec l'axe du projectile, $\theta_2$ étant ici égal à $-\theta_1$.

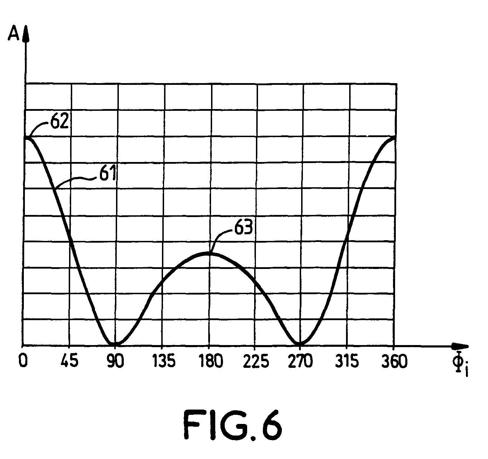

La figure 5 montre comment est levée l'ambiguïté en illustrant l'effet conjugué d'une observation décalée de l'angle $\theta_0$ par rapport à l'axe de symétrie 44 du projectile et de la modulation dissymétrique de la profondeur des rainures. Plus particulièrement, la figure 5 représente par deux courbes la puissance P du signal rétrodiffusé en fonction de l'angle $\theta$ que fait l'axe de symétrie 44 du projectile par rapport à l'axe 43 du faisceau d'antenne 42, pour les deux positions de roulis illustrées par les figures 4a et 4b.

Une première courbe 51 représente donc la puissance du signal rétrodiffusé par le culot en fonction de l'angle $\theta$ dans le cas de la figure 4a, c'est-à-dire dans le cas où la normale au plan de phase est décalée de $\theta_1$. La position de roulis du projectile de la figure 4a est supposée correspondre à titre d'exemple à l'angle de roulis $\Phi_i$ égal à 0°. Le maximum de puissance correspond à l'angle $\theta_1$. La courbe 51, supposée gaussienne, est symétrique par rapport à cet angle. De façon symétrique, une deuxième courbe 52 représente la puissance du signal rétrodiffusé en fonction de l'angle $\theta$ dans le cas où l'angle de roulis $\Phi_i$ est décalé de 180°, cas illustré par la figure 4b. Cette courbe 52 est symétrique par rapport à l'angle $\theta_2$, lui-même égal à $-\theta_1$.

Dans la direction d'observation radar $\theta_0$, la puissance rétrodiffusée a un niveau de puissance égal à P1 pour l'angle de roulis $\Phi_i$ égal à 0°, niveau défini par la première courbe 51, et un niveau de puissance P2 pour un angle de roulis $\Phi_i$ égal à 180°, niveau défini par la deuxième courbe 52. La figure 5 montre que ces deux niveaux P1, P2 peuvent être nettement différents. Connaissant par exemple la modulation de profondeur des rainures, on peut lever l'ambiguïté sur la mesure du roulis. Dans l'exemple de positions de roulis des figures 4a et 4b, le maximum de puissance entre les deux niveaux P1 et P2 correspond à la position de la figure 4a, où le roulis est choisi égal à 0°.

La figure 6 illustre par une courbe 61 la modulation d'amplitude A du signal reçu, c'est-à-dire du signal analysé au niveau du radar, en réception. Ce signal est analysé par des moyens de traitement associés au radar. Cette modulation 61 est représentée en fonction de l'angle de roulis $\Phi_i$ du projectile. Elle présente deux maxima locaux 62, 63 entre 0° et 360°. Ces deux maxima correspondent à des positions de roulis du projectile telles que la polarisation $\vec{E}$ soit parallèle aux rainures 21 du culot. En conservant la référence prise comme exemple pour les figures 4a et 4b, le plus grand des deux maxima d'amplitude correspond à l'angle 0° alors que le plus petit des deux maxima correspond à l'angle 180°.

Un dispositif selon l'invention comporte au moins un radar 41 émettant un signal polarisé selon au moins une direction et des rainures 21 par exemple usinées dans le culot du projectile avec une profondeur modulée de façon dissymétrique par rapport à l'axe 44 du projectile. Ce dernier est par ailleurs décalé d'un angle $\theta_0$ par rapport à l'axe 43 du faisceau d'antenne 42 du radar.

Comme le montre la figure 3, des rainures permettent à des moyens de traitement de radar de déterminer l'angle de roulis du projectile à 180° près. En fait, ces moyens peuvent déterminer la position dans l'espace d'un plan contenant par exemple l'axe 44 du projectile et la direction perpendiculaire aux rainures. Cette position est définie par rapport à la polarisation incidente $\vec{E}$ de l'onde émise par le radar.

Une fois que l'on sait situer ce plan dans l'espace, il reste cependant une ambiguïté de 180° pour définir la position de l'origine du roulis relativement à la polarisation $\vec{E}$. En raison du décalage angulaire de l'axe 44 du projectile par rapport à l'axe 43 de l'antenne et de la modulation de profondeur des rainures, on peut lever l'ambiguïté grâce à l'analyse des maxima locaux 62, 63 de la courbe de modulation 61 de la figure 6. Les moyens de traitement du radar comparent alors les niveaux de signaux reçus dans un plan orthogonal à l'axe d'antenne 43 selon deux directions de roulis espacées de 180°, ces directions étant parallèles au plan précité. La courbe de modulation 61 de la figure 6 permet par exemple de conclure que le signal de plus forte amplitude correspond à l'angle de roulis 0°.

Pour améliorer la mesure de l'angle de roulis, l'analyse du signal de réception peut se faire par exemple selon deux polarisations orthogonales.

Connaissant par exemple la position latérale de l'impulseur 2 par rapport aux rainures, la détermination de l'angle de roulis ou plus particulièrement la détermination de la position des rainures par rapport à la direction connue de la polarisation incidente $\vec{E}$ permet de commander l'impulseur au bon moment, en fonction de la correction de trajectoire envisagée.

Un dispositif selon l'invention présente une grande fiabilité puisqu'il est entièrement passif à bord du projectile. Il est par ailleurs simple à réaliser et ne nécessite pas de composants particulièrement complexes ou coûteux.

**Revendications**

1. Dispositif de mesure de l'angle de roulis d'un projectile, caractérisé en ce qu'il comporte au moins :

   - un radar équipé de moyens de traitement et émettant un signal vers le culot (22) du projectile selon au moins une direction de polarisation incidente $\vec{E}$ ;
   - un ensemble de rainures parallèles (21) réalisées sur le culot (22) dont la profondeur est modulée de façon dissymétrique par rapport à l'axe de symétrie (44) du projectile ;

   l'axe de symétrie (44) du projectile ne passant pas par le point (A) de l'antenne (41) du radar où est généré le faisceau d'antenne (42), les moyens de traitement analysant en réception un signal rétrodiffusé par le culot (22) du projectile, ce signal étant modulé en fonction de l'angle de roulis ($\Phi_i$) du projectile, la modulation présentant deux maxima locaux (62, 63) correspondant à des positions angulaires de roulis du projectile telles que la polarisation $\vec{E}$ est parallèle aux rainures, les moyens de traitement levant l'ambiguïté de 180° en comparant les niveaux des maxima locaux.

2. Dispositif selon la revendication 1, caractérisé en ce que la profondeur des rainures croît d'une rainure périphérique à l'autre rainure périphérique.

3. Dispositif selon la revendication 2, caractérisé en ce que la profondeur des rainures croît linéairement.

4. Dispositif selon l'une quelconque des revendications précédentes, caractérisé en ce que l'angle de roulis de référence correspond au maximum (62) de niveau le plus élevé.

5. Dispositif selon la revendication 4, caractérisé en ce que l'angle de référence est pris comme angle d'origine 0°.

6. Dispositif selon l'une quelconque des revendications précédentes, caractérisé en ce que le signal reçu est analysé selon deux polarisations orthogonales.

7. Dispositif selon l'une quelconque des revendications précédentes, caractérisé en ce que les rainures sont usinées sur le culot.

8. Correction de la trajectoire d'un projectile, le projectile (1) comportant un impulseur latéral (2), caractérisé en ce qu'il comporte des rainures (21) modulées en profondeur sur son culot (22), l'impulseur étant commandé en fonction de l'angle de roulis mesuré par le dispositif selon l'une quelconque des revendications précédentes.

FIG.1

FIG.2

FIG.3

ROULIS = 0°

FIG.4a

ROULIS = 180°

FIG.4b

FIG.5

EP 1 108 970 A1

FIG.6

**Office européen des brevets**

# RAPPORT DE RECHERCHE EUROPEENNE

Numéro de la demande

EP 00 40 3378

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | NL 8 501 616 A (HOLLANDSE SIGNAALAPPARATEN BV) 2 janvier 1987 (1987-01-02) * page 2, ligne 31 - page 8, ligne 7; figures 1-4 * --- | 1,4,5,7, 8 | F41G7/30 |
| A | EP 0 343 131 A (BOFORS AB) 23 novembre 1989 (1989-11-23) * abrégé * * page 3, colonne 3, ligne 2 - page 4, colonne 5, ligne 5; figures 1-9 * --- | 1,4,6,8 | |
| A | GB 2 302 224 A (SECR DEFENCE) 8 janvier 1997 (1997-01-08) * abrégé * * page 3, ligne 1 - page 5, ligne 36; figure 16 * --- | 1,8 | |
| A,D | US 5 039 029 A (TAYLOR LEONARD S  ET AL) 13 août 1991 (1991-08-13) * abrégé * * colonne 3, ligne 13 - colonne 4, ligne 51; figures 1-6 * ----- | 1,8 | **DOMAINES TECHNIQUES RECHERCHES (Int.Cl.7)** F41G |

Le présent rapport a été établi pour toutes les revendications

| Lieu de la recherche | Date d'achèvement de la recherche | Examinateur |
|---|---|---|
| LA HAYE | 2 mars 2001 | Blondel, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 00 40 3378

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-03-2001

| Document brevet cité au rapport de recherche | | Date de publication | Membre(s) de la famille de brevet(s) | | Date de publication |
|---|---|---|---|---|---|
| NL 8501616 | A | 02-01-1987 | AUCUN | | |
| EP 0343131 | A | 23-11-1989 | SE | 463579 B | 10-12-1990 |
| | | | AU | 619290 B | 23-01-1992 |
| | | | AU | 3477589 A | 23-11-1989 |
| | | | FI | 892350 A | 18-11-1989 |
| | | | JP | 2025698 A | 29-01-1990 |
| | | | NO | 891971 A | 20-11-1989 |
| | | | SE | 8801831 A | 18-11-1989 |
| | | | US | 5099246 A | 24-03-1992 |
| GB 2302224 | A | 08-01-1997 | AUCUN | | |
| US 5039029 | A | 13-08-1991 | AUCUN | | |

EPO FORM P0460

Pour tout renseignement concernant cette annexe : voir Journal Officiel de l'Office européen des brevets, No.12/82